(19) Europäisches Patentamt
European Patent Office
Office européen des brevets

(11) **EP 3 509 823 B1**

(12) **EUROPÄISCHE PATENTSCHRIFT**

(45) Veröffentlichungstag und Bekanntmachung des Hinweises auf die Patenterteilung:
**12.10.2022 Patentblatt 2022/41**

(21) Anmeldenummer: **17771698.2**

(22) Anmeldetag: **11.09.2017**

(51) Internationale Patentklassifikation (IPC):
**B29C 67/00** (2017.01)    **B33Y 70/00** (2020.01)
**B29C 64/106** (2017.01)    **B29C 64/118** (2017.01)
**B33Y 10/00** (2015.01)

(52) Gemeinsame Patentklassifikation (CPC):
**B29C 64/118; B33Y 10/00; B33Y 70/00**

(86) Internationale Anmeldenummer:
**PCT/EP2017/072731**

(87) Internationale Veröffentlichungsnummer:
**WO 2018/046726 (15.03.2018 Gazette 2018/11)**

(54) **SCHMELZSCHICHTUNGS-BASIERTES ADDITIVES FERTIGUNGSVERFAHREN BEI NIEDRIGER TEMPERATUR**

MELT COATING BASED ADDITIVE MANUFACTURING PROCESS AT LOW TEMPERATURE

PROCÉDÉ DE FABRICATION ADDITIF BASE SUR LA STRATIFICATION PAR FUSION À BASSE TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2016 EP 16188416**

(43) Veröffentlichungstag der Anmeldung:
**17.07.2019 Patentblatt 2019/29**

(73) Patentinhaber: **Covestro Deutschland AG**
**51373 Leverkusen (DE)**

(72) Erfinder:
• **ACHTEN, Dirk**
 **51375 Leverkusen (DE)**
• **BÜSGEN, Thomas**
 **51377 Leverkusen (DE)**
• **DIJKSTRA, Dirk**
 **51519 Odenthal (DE)**
• **DEGIORGIO, Nicolas**
 **47807 Krefeld (DE)**
• **WAGNER, Roland**
 **51375 Leverkusen (DE)**
• **AKBAS, Levent**
 **58455 Witten (DE)**
• **REICHERT, Peter**
 **41541 Dormagen (DE)**
• **BÜCHNER, Jörg**
 **51467 Bergisch Gladbach (DE)**

(74) Vertreter: **Davepon, Björn**
**Patentanwaltskanzlei Davepon**
**Schloss Dyck**
**41363 Jüchen (DE)**

(56) Entgegenhaltungen:
**WO-A1-2016/108154**

• **Keith W. Grauer: "Fused Deposition Modeling", , 26. März 2015 (2015-03-26), XP002767137, Gefunden im Internet: URL:http://sites.psu.edu/keithgrauerportfolio/wp-content/uploads/sites/26487/2015/04/Defining-Fused-Deposition-Modeling1.pdf [gefunden am 2016-12-06]**

## EP 3 509 823 B1

**Beschreibung**

Die vorliegende Erfindung betrifft ein Verfahren nach Anspruch 1 zur Herstellung eines Gegenstandes, umfassend die Schritte: I) Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht; II) Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist; III) Wiederholen des Schritts II), bis der Gegenstand gebildet ist; wobei die wenigstens die Schritte II) und III) innerhalb einer Kammer durchgeführt werden und das Aufbaumaterial ein schmelzbares Polymer aufweist. Die vorliegende Anmeldung offenbart ebenfalls einen durch das erfindungsgemäße Verfahren hergestellten Gegenstand, einen Artikel mit einem Substrat und einem mit dem Substrat verbundenen Gegenstand, wobei der Gegenstand als Klebstoff-Fuge oder Lack-Bereich ausgebildet ist.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen, Bohren oder Zerspanen. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) oder Schmelzschichtungsverfahren beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ein frühes Patentdokument für diese Technologie ist US 5,121,329. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Auf Basis der Polymere, die heute in polymerbasierten additiven Fertigungsverfahren vorwiegend eingesetzt werden, entstehen Gegenstände, deren mechanische Eigenschaften sich grundlegend von der Charakteristik der Materialien unterscheiden können, wie sie in anderen kunststoffverarbeitenden Verfahren, wie dem Spritzgießen, bekannt sind. Bei der Verarbeitung durch die additiven Fertigungsverfahren verlieren die eingesetzten thermoplastischen Materialien ihre spezifische Charakteristik.

Polyamid 12 (PA12) ist der derzeit einer der am meisten eingesetzten Werkstoffe für additive Fertigungsverfahren. PA12 zeichnet sich durch hohe Festigkeit und Zähigkeit aus, wenn es im Spritzguss oder durch Extrusion verarbeitet wird. Während des Aufschmelzvorgangs und insbesondere beim Abkühlen entsteht eine unregelmäßige innere Struktur der so genannten teilkristallinen Polymere (beispielsweise PA12 und auch PP). Die innere Struktur (Morphologie) teilkristalliner Polymere ist teilweise durch hohe Ordnung gekennzeichnet. Ein gewisser Anteil der Polymerketten bildet beim Abkühlen kristalline, eng gepackte Strukturen aus. Während des Aufschmelzens und Abkühlens wachsen diese Kristallite unregelmäßig. Die Unregelmäßigkeit der so entstehenden Morphologie begünstigt unter mechanischer Belastung das Entstehen von Rissen. Die beim pulverbasierten additiven Verfahren nicht zu vermeidende Restporosität fördert das Risswachstum. Spröde Eigenschaften der so entstandenen Bauteile sind das Resultat. Zur Erläuterung dieser Effekte wird auf European Polymer Journal 48 (2012), Seiten 1611-1621 verwiesen.

WO 2015/197515 A1 beschreibt ein thermoplastisches pulverförmiges Mittel enthaltend 0,02 bis 0,5 Gew.-%, bezogen auf die Gesamtmenge an Mittel, Fließmittel und pulverförmiges thermoplastisches Polyurethan, wobei mindestens 90 Gew.-% des Mittels einen Teilchendurchmesser von kleiner 0,25 mm aufweist, wobei das thermoplastische Polyurethan erhältlich ist aus der Reaktion der Komponenten a) mindestens ein organisches Diisocyanat b) mindestens eine mit gegenüber Isocyanatgruppen reaktiven Gruppen aufweisenden Verbindung mit einem zahlenmittleren Molekulargewicht ($M_n$) von 500 g/mol bis 6000 g/mol und einer zahlenmittleren Funktionalität der Gesamtheit der Komponenten unter b) von 1,8 bis 2,5 c) mindestens ein Kettenverlängerungsmittel mit einem Molekulargewicht ($M_n$) von 60 - 450 g/mol und einer zahlenmittleren Funktionalität der Gesamtheit der Kettenverlängerungsmittel unter c) von 1,8 bis 2,5 in Gegenwart von d) gegebenenfalls Katalysatoren e) gegebenenfalls Hilfs- und/oder Zusatzmitteln f) gegebenenfalls einen oder mehrere Kettenabbrecher.

Das thermoplastische Polyurethan gemäß WO 2015/197515 A1 weist einen Schmelzbereich (DSC, Differential Scanning Calorimetry; zweite Aufheizung mit Aufheizrate 5K/min) von 20 bis 170° C und eine Shore A Härte gemäß DIN ISO 7619-1 von 50 bis 95 auf, hat bei einer Temperatur T eine Schmelzvolumenrate (melt volume rate (MVR)) gemäß ISO 1133 von 5 bis 15 cm$^3$/10 min und eine Änderung des MVR bei einer Erhöhung dieser Temperatur T um 20 °C von kleiner 90 cm$^3$/10 min auf. Der Einsatzzweck ist die Herstellung von Gegenständen in pulverbasierten additiven Fertigungsverfahren.

WO 2015/109141 A1 offenbart Systeme und Verfahren für die Freiform-Herstellung von Festkörpern, insbesondere Schmelzschichtungsverfahren, sowie diverse mit den Verfahren erhaltene Artikel. Die Systeme und Verfahren verwenden bestimmte thermoplastische Polyurethane, welche abgeleitet sind von (a) einer Polyisocyanat-Komponente, (b) einer PolyolKomponente und (c) einer optionalen Kettenverlängerungs-Komponente, wobei das erhaltene thermoplastische Polyurethanpolymer eine Kristallisationstemperatur oberhalb von 80 °C aufweist und bei 100 °C mehr als 20% seines Speichermoduls relativ zum Speichermodul bei 20 °C behält. WO 98/53974 A1 betrifft den schnellen Prototypenbau von festen Modellen aus thermoplastischen Materialien und insbesondere ein Verfahren für den schnellen Prototypenbau von Modellen, wobei eine Wölbungsneigung bzw. Verwölbung und andere Modi einer Verformung vermindert sind. Beansprucht wird ein Verfahren zur Herstellung eines dreidimensionalen physikalischen Objekts von vorbestimmter Form unter Steuerung eines Steuersystems, wobei das Verfahren ein thermisch verfestigbares Material mit einer Verfestigungstemperatur und einer Kriechrelaxationstemperatur anwendet, wobei das Verfahren die Schritte umfasst: a. Ausgeben des thermisch verfestigbaren Materials in einem flüssigen Zustand von einem Extruder in einen Aufbaubereich mit mindestens einer lokalen Bereichstemperatur, die die Verfestigungstemperatur des thermisch verfestigbaren Materials übersteigt; b. gleichzeitig mit dem Ausgeben des thermisch verfestigbaren Materials und in Reaktion auf das Steuersystem, Erzeugen einer relativen Bewegung zwischen dem Extruder und einem Träger in dem Aufbaubereich, sodass sich das thermisch verfestigbare Material auf dem Träger anlagert, um ein dreidimensionales physikalisches Objekt zu bilden; und c. Verfestigen des thermisch verfestigbaren Materials durch Kühlen der lokalen Bereichstemperatur und des Materials unter die Verfestigungstemperatur des Materials.

In der Praxis ist die Beheizung der Kammer in Schmelzschichtungs-Verfahren mit einem unerwünschten Temperaturgradienten von inneren Bereichen der Kammer zu außen liegenden Bereichen der Kammer verbunden und damit auch mit einem unerwünschten Temperaturgradienten innerhalb des Bauteils. Insbesondere bei teilkristallinen thermoplastischen Polymeren kann dieser Umstand aufgrund von unterschiedlichen Rekristallisationskinetiken zu Variationen in Materialeigenschaften innerhalb des fertigen Bauteils führen.

Das Dokument WO 2016/108154 A1 offenbart ein Schmelzschichtungsverfahren zur Herstellung eines Gegenstandes, wobei ein thermoplastisches Polymer mit einem Schmelzbereich unter 100°C insbesondere unter 70°C verwendet wird.

Im Stand der Technik existiert weiterhin der Bedarf an additiven Herstellungsverfahren, in denen Polymere mit niedrigem Schmelzbereich eingesetzt werden können und in denen die erhaltenen Bauteile homogene Materialeigenschaften aufweisen. Die vorliegende Erfindung hat sich die Aufgabe gestellt, die Nachteile im Stand der Technik zumindest teilweise zu beheben. Insbesondere hat sie sich die Aufgabe gestellt, ein derartiges Schmelzschichtungsverfahren anzugeben.

Erfindungsgemäß vorgeschlagen wird ein Verfahren nach Anspruch 1 zur Herstellung eines Gegenstandes, umfassend die Schritte:

I) Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
II) Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
III) Wiederholen des Schritts II), bis der Gegenstand gebildet ist;

wobei wenigstens die Schritte II) und III) innerhalb einer Kammer durchgeführt werden und das Aufbaumaterial ein schmelzbares Polymer aufweist.

Das schmelzbare Polymer ein Polyurethan ist, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von > 25 °C aufweist.

Das schmelzbare Polymer weist einen Schmelzbereich (DSC, differential scanning calorimetry; 2. Aufheizung mit Aufheizrate 5 K/min.) von ≥ 20 °C bis ≤ 100 °C aufweist. Ferner weist das schmelzbare Polymer einen Betrag der komplexen Viskosität $|\eta^*|$ (bestimmt durch Viskosimetriemessung in der Schmelze mit einem Platte/Platte-Oszillationsscherviskosimeter bei 100 °C und einer Scherrate von 1/s) von ≥ 10 Pas bis ≤ 1000000 Pas auf.

Schließlich beträgt die Temperatur innerhalb der Kammer ≤ 50 °C. Bevorzugt wird unter der Temperatur innerhalb der Kammer insbesondere die Temperatur des in der Kammer befindlichen Materials verstanden. Weiterhin bevorzugt ist die Temperatur innerhalb der Kammer identisch mit der Temperatur des darin befindlichen Materials.

Im erfindungsgemäßen Verfahren wird ein Gegenstand schichtweise aufgebaut. Insofern handelt es sich um ein Schmelzschichtungs- oder Fused Deposition Modeling (FDM)-Verfahren. Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für das Auftragen durchgeführt werden. Ein elektronisches Modell des zu bildenden Gegenstands liegt zweckmäßigerweise in einem CAD-Programm vor. Das CAD-Programm kann dann Querschnitte des Modells berechnen, die durch Auftragen des Filaments zu Querschnitten des Gegenstands werden.

Die einzelnen Filamente, welche aufgetragen werden, können einen Durchmesser von $\geq 50\ \mu m$ bis $\leq 200\ \mu m$ aufweisen. Weiterhin bevorzugt können die Filamente auch einen Durchmesser von $\geq 50\ \mu m$ bis $\leq 2000\ \mu m$ aufweisen.

Schritt I) des Verfahrens betrifft den Aufbau der ersten Lage auf einen Träger. Anschließend wird so lange Schritt II) ausgeführt, in dem auf zuvor aufgetragene lagen des Aufbaumaterials weiter Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen.

Die Temperatur, mit der das zumindest teilweise geschmolzen Aufbaumaterial aufgetragen wird, liegt vorzugsweise mindestens 10° C oberhalb der Schmelztemperatur und vorzugsweise < 100° C oberhalb der oberen Temperatur des Schmelzbereichs des schmelzbaren Polymers.

Die Temperatur, mit der das zumindest teilweise geschmolzen Aufbaumaterial aufgetragen wird, liegt vorzugsweise mindestens 10° C oberhalb der Schmelztemperatur und vorzugsweise < 200° C oberhalb der oberen Temperatur des Schmelzbereichs des schmelzbaren Polymers.

Neben dem schmelzbaren Polymer kann das Aufbaumaterial noch weitere Additive wie Füllstoffe, Stabilisatoren und dergleichen, aber auch weitere Polymere, enthalten. Der Gesamtgehalt an Additiven im Aufbaumaterial kann beispielsweise $\geq 0,1$ Gewichts-% bis $\leq 10$ Gewichts-%, bevorzugt $\geq 1$ Gewichts-% bis $\leq 5$ Gewichts-%, betragen.

Das schmelzbare Polymer weist einen Schmelzbereich von $\geq 20$ °C bis $\leq 100$ °C, vorzugsweise von $\geq 25$ °C bis $\leq 90$ °C und mehr bevorzugt von $\geq 30$ °C bis $\leq 80$ °C auf. Bei der DSC-Messung zur Bestimmung des Schmelzbereichs wird das Material folgendem Temperaturzyklus unterworfen: 1 Minute bei -60 °C, danach Aufheizen auf 200 °C mit 5 Kelvin/Minute, dann Abkühlen auf -60 °C mit 5 Kelvin/Minute, dann 1 Minute bei -60 °C, dann Aufheizen auf 200 °C mit 5 Kelvin/Minute. Das Aufbaumaterial selbst kann ebenfalls einen Schmelzbereich von $\geq 20$ °C bis $\leq 100$ °C, vorzugsweise von $\geq 25$ °C bis $\leq 90$ °C und mehr bevorzugt von $\geq 30$ °C bis $\leq 80$ °C, gemäß der zuvor genannten Methode aufweisen.

Es ist möglich, dass das Temperaturintervall zwischen Beginn des Schmelzvorgangs und Ende des Schmelzvorgangs, wie es gemäß dem obigen DSC-Protokoll bestimmt werden kann, $\leq 20$ °C, bevorzugt $\leq 10$ °C und mehr bevorzugt $\leq 5$ °C beträgt. Die Temperatur zu Beginn des Schmelzvorgangs wird auch $T_{onset}$ bezeichnet und die Temperatur am Ende des Schmelzvorgangs als T offset.

Im Folgenden wird die Art des Auftragens des Filaments in Schritt I) des erfindungsgemäßen Verfahrens auch "Extrudieren" genannt und das Gerät zum Auftragen in Schritt I) auch "Extruder". Die Temperatur bei der das Material aufgetragen bzw. extrudiert wird, wird als Extrusionstemperatur bezeichnet.

Bevorzugt liegt die Schmelztemperatur Tm des schmelzbaren Polymers bzw. die Glasübergangstemperatur Tg des amorphen Polymers, das in Form eines Filaments, eines Granulats oder eines anderen geeigneten "Futter"-Materials für die im erfindungsgemäßen Verfahren zur Herstellung eines Gegenstandes verwendeten Extruder benutzt wird, in einem Bereich von 10 bis 99 °C, oder bevorzugt von 20 bis 80 °C, oder bevorzugt von 30 bis 60 °C oberhalb der Temperatur innerhalb des Bauraums während des erfindungsgemäßen Verfahrens. Bevorzugt ist die Extrusionstemperatur des Materials im erfindungsgemäßen Verfahren >10°C, bevorzugt >30°C, oder bevorzugt > 50°C, oder bevorzugt > 100°C, oder bevorzugt > 150°C höher als die Schmelztemperatur Tm bzw. Glastemperatur Tg im Falle eines amorphen Materials des erfindungsgemäßen Materials. Wenn von einem Schmelzpunkt Tm gesprochen wird, wird hierbei zweckmäßig die obere Temperatur (T offset) des Schmelzbereiches als Schmelzpunkt angenommen. Bevorzugt erfolgt die Extrusion des erfindungsgemäßen Materials im erfindungsgemäßen Verfahren mit einer Extrusionsgeschwindigkeit von > 1mm / min bevorzugt, > 10 mm / min, besonders bevorzugt > 100 mm / min. In einer besonders bevorzugten Ausführungsform ist die XY Verfahrgeschwindigkeit in mm / min des Extrusionskopfes im erfindungsgemäßen Verfahren mindestens 2 mal, bevorzugt mindestens 5 mal und besonders bevorzugt mindestens 10 mal so hoch wie die Extrusionsgeschwindigkeit des Filaments aus dem Extrusionskopf. In einer bevorzugten Ausführungsform ist die Linienbreite des abgelegten extrudierten Filaments mindestens 1,5 mal, bevorzugt mindestens 2 mal so breit wie die Linienhöhe des extrudierten Filaments. In einer besonderen Ausführungsform entstehen so bevorzugt ovale Auftragsformen auf dem gegebenen Substrat. Ein weiterer Vorteil dieser Auftragsgeometrie ist die erhöhte Oberfläche, die eine bessere Temperierung im gekühlten Bauraum ermöglicht. Bevorzugt wird der Schichtauftrag mit einem Flächen-Anpressdruck von > 0,1 bar, bevorzugt > 0,2 bar, oder bevorzugt > 0,5 bar aber bevorzugt < 20 bar durchgeführt. Der Anpressdruck ergibt sich aus der Kombination von Substratmodul, Viskosität des Extrudats und dem Verhältnis von Extrusionsdüsendurchmesser zum Abstand des Extrusionskopfes zum Substrat. Weiterhin bevorzugt wird die Substratgeometrie beim Auftrag des Extrudats verformt. Bevorzugt ist die Substrathöhe nach Auftrag des Extrudates < als die Substrathöhe vor Auftrag des Extrudates, vermindert um die Auftragsdicke des Extrudates. Bevorzugt handelt es sich bei dem Substrat um das Extrudat aus einer vorherigen Lage. Bevorzugt erhöht das aufgetragene Extudat die mittlere Temperatur der darunter liegenden, bevorzugt gleich dicken Substratlage um > 5°C, bevorzugt > 20°C oder bevorzugt > 30°C aber bevorzugt um < 80°C. Bevorzugt verringert sich der Modul G' der Substratlage, besonders wenn es sich beim Substrat um das gleiche Material wie das Extrudat handelt um > 20% , bevorzugt > 40%, oder bevorzugt > 50% aber bevorzugt um < 95%. Der Modul G' einer Lage wird bestimmt aus der Temperatur der Lage (gemessen mittels einer hochauflöscndcn Wärmcbildkamcra) und einer Temperatur-Modul Messung bei einer Scherrate von 0,1/s in einem handelsüblichen Platte / Platte Rheometer wobei die Messung bei 120°C startet und mit 1°C / min auf 0°C abgekühlt wird.

Bevorzugt ist die Zeit zwischen zwei Lagen < 10 min, bevorzugt < 5 min, oder bevorzugt < 2 min, oder bevorzugt < 1 min, oder > 30 sec. Bevorzugt ist die Zeit zwischen zwei Lagen in einem Bereich von 30 sec bis 10 min, oder bevorzugt von 35 sec bis 5 min, oder bevorzugt von 40 sec bis 2 min.

Das schmelzbare Polymer weist ferner einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 100 °C und einer Scherrate von 1/s) von $\geq$ 10 Pas bis $\leq$ 1000000 Pas auf. Vorzugsweise beträgt $|\eta^*|$ bei diesen Messbedingungen $\geq$ 100 Pas bis $\leq$ 500000 Pas, mehr bevorzugt $\geq$ 1000 Pas bis $\leq$ 200000 Pas.

Der Betrag der komplexen Viskosität $|\eta^*|$ beschreibt das Verhältnis der viskoelastischen Moduln $G'$ (Speichermodul) und $G''$ (Verlustmodul) zur Anregungsfrequenz $\omega$ in einer dynamischmechanischen Materialanalyse:

$$|\eta^*| = \sqrt{\left[ \left( \frac{G'}{\omega} \right)^2 + \left( \frac{G''}{\omega} \right)^2 \right]} = \frac{|G^*|}{\omega}$$

Es ist erfindungsgemäß weiterhin vorgesehen, dass die Temperatur innerhalb der Kammer $\leq$ 50 °C beträgt. Vorzugsweise ist die Temperatur $\geq$ 0 °C bis $\leq$ 50 °C, mehr bevorzugt $\geq$ 5 °C bis $\leq$ 40 °C und besonders bevorzugt $\geq$ 10 °C bis $\leq$ 35 °C. Weiterhin bevorzugt ist die Temperatur innerhalb der Kammer $\geq$ -75 °C bis $\leq$ 50 °C, mehr bevorzugt $\geq$ -40 °C bis $\leq$ 40 °C und besonders bevorzugt $\geq$ 0 °C bis $\leq$ 35 °C und ganz besonders bevorzugt $\geq$ 5 °C bis $\leq$ 25 °C.

Die Kombination aus dem eher niedrigen Schmelzbereich und der komplexen Viskosität des schmelzbaren Polymers in Verbindung mit der eher niedrigen Temperatur der Kammer und somit des schmelzbaren Polymers hat mehrere Vorteile. Es ist möglich, Bauteilverformungen ("Warping") durch räumlich unterschiedliche Kristallisationsvorgänge zu vermindern oder zu unterdrücken. Dadurch, dass bei einer Temperatur von unter 100 °C gearbeitet wird, lassen sich Blasenbildungen im Bauteil durch Wasserdampf vermeiden. Somit kann das Polymer größere Mengen an Wasser enthalten als bei höheren Temperaturen in der Kammer.

Bei den komplexen Viskositäten im erfindungsgemäß angegebenen Bereich kann davon ausgegangen werden, dass bei einer gewählten Kammertemperatur, welche $\leq$ 50 °C beträgt, bei dem eingesetzten schmelzbaren Polymer keine oder nur technisch unbedeutende Klebrigkeit ("tackiness") auftritt.

Ebenso kann das Ausmaß der Sublimation von organischen Verbindungen in die Kammer verringert werden. Dann können auch Weichmacher und Lösungsmittel enthaltende Polymere verarbeitet werden. Eine speziell getrocknete oder inerte Atmosphäre in der Kammer ist nicht erforderlich. Ebenso wird der Explosionsschutz in der Kammer verbessert, wenn bei einer Temperatur unterhalb des Flammpunkts der in der Kammer vorliegenden Substanzen gearbeitet wird.

Ausführungsformen und weitere Aspekte der Erfindung werden nachfolgend geschildert. Sie können beliebig miteinander kombiniert werden, sofern sich aus dem Kontext nicht eindeutig das Gegenteil ergibt.

In einer Ausführungsform des erfindungsgemäßen Verfahrens wird das Innere der Kammer zumindest zeitweise gekühlt. Geeignete Kühlmethoden sind unter anderem die Kühlung einer oder mehrerer Wände der Kammer oder das Bereitstellen von kaltem, inerten Gas innerhalb der Kammer.

In einer weiteren bevorzugten Ausführungsform des erfindungsgemäßen Verfahrens wird das Innere der Kammer zumindest zeitweise nicht beheizt. Dann wird die durch den FDM-Druckkopf und die Polymerschmelze eingetragene thermische Energie zur Aufrechterhaltung der gewünschten Temperatur in der Kammer ausgenutzt.

In einer weiteren bevorzugten Ausführungsform des erfindungsgemäßen Verfahrens weist das schmelzbare Polymer eine Shore-Härte (DIN ISO 7619-1) von $\geq$ 40A bis $\leq$ 80D auf. Bevorzugt sind Shore-Härten von $\geq$ 40A bis $\leq$ 70D, mehr bevorzugt $\geq$ 50A bis $\leq$ 50D.

Erfindungsgemäß ist das schmelzbare Polymer ein Polyurethan, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von $\geq$ 25 °C aufweist.

Gegebenenfalls können bei der Reaktion zum Polyurethan weiterhin Diole des Molekulargewichtsbereichs von $\geq$ 62 bis $\leq$ 600 g/mol als Kettenverlängerungsmittel eingesetzt werden.

Die Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind ausgewählt aus der Gruppe bestehend aus: 2,2,4-Trimethyl-hexamethylendiisocyanat, Ethylethylendiisocyanat, nicht-symmetrische Isomere des Dicyclohexylmethandiisocyanat ($H_{12}$-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethandiisocyanat (MDI), 2,4- und 2,6-Toluylendiisocyanat (TDI), Derivate der aufgeführten Diisocyanate, insbesondere dimerisierte oder trimerisierte Typen, oder einer Kombination aus mindestens zwei hiervon.

Bevorzugt sind 4,4'-MDI oder eine Mischung enthaltend IPDI und HDI als Polyisocyanatkomponente.

Die Polyolkomponente weist ein Polyesterpolyol auf, welches einen Stockpunkt (No Flow Point, ASTM D5985) von ≥ 25 °C, vorzugsweise ≥ 35 °C, mehr bevorzugt ≥ 35 °C bis ≤ 55 °C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Ohne auf eine Theorie beschränkt zu sein wird angenommen, dass Polyurethane auf der Basis der zuvor diskutierten nicht-symmetrischen Polyisocyanate und Polyesterpolyole mit den angegebenen Stockpunkten derart aufgebaut sind, dass die von den Polyisocyanaten stammenden Gruppen im Polymer Weichsegmente darstellen und die von den Polyesterpolyen stammenden Gruppen im Polymer Hartsegmente darstellen.

Bei den erfindungsgemäßen vorgesehenen Temperaturen in der Kammer des Verarbeitungs-Geräts wird angenommen, dass die Beweglichkeit der Polyesterketten in Polyurethan so eingeschränkt ist, wie es beim freien Polyesterpolyol unterhalb seines Stockpunkts wäre. Entsprechend weist das Polyurethanpolymer unter den Verarbeitungsbedingungen (vorzugsweise nach einer Zeit von ≥ 1 Minute bis ≤ 2 Stunden) keine oder nur eine technisch unbedeutende Klebrigkeit ("tackiness") auf.

Beispiele für Polyesterpolyole, welche solch einen Stockpunkt aufweisen können, sind Reaktionsprodukte von Phthalsäure, Phthalsäureanhydrid oder symmetrischen $\alpha,\omega$-$C_4$- bis $C_{10}$-Dicarbonsäuren mit einem oder mehreren $C_2$- bis $C_{10}$-Diolen. Sie weisen bevorzugt ein zahlenmittleres Molekulargewicht $M_n$ von ≥ 400 g/mol bis ≤ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol. Bevorzugte Polyurethane werden aus einer Mischung enthaltend IPDI und HDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Es ist ferner bevorzugt, dass die Polyesterpolyole eine OH-Zahl (DIN 53240) von ≥ 25 bis ≤ 170 mg KOH/g und/oder eine Viskosität (75 °C, DIN 51550) von ≥ 50 bis ≤ 5000 mPas aufweisen.

Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von ≥ 1:4 bis ≤ 4:1 erhältlich ist und welches ein zahlenmittleres Molekulargewicht $M_n$ (GPC, gegen Polystyrol-Standards) von ≥ 4000 g/mol bis ≤ 6000 g/mol aufweist. Solch ein Polyurethan kann einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 100 °C und einer Scherrate von 1/s) von ≥ 4000 Pas bis ≤ 160000 Pas aufweisen.

Ein weiteres Beispiel für ein geeignetes Polyurethan ist:

1. Weitgehend lineare, endständige Hydroxylgruppen aufweisende Polyesterpolyurethane wie in EP 0192946 A1 beschrieben, hergestellt durch Umsetzung von

a) Polyesterdiolen eines über 600 liegenden Molekulargewichts und gegebenenfalls

b) Diolen des Molekulargewichtsbereichs von 62 bis 600 g/mol als Kettenverlängerungsmittel mit

c) aliphatischen Diisocyanaten

unter Einhaltung eines Äquivalentverhältnisses von Hydroxylgruppen der Komponenten a) und b) zu Isocyanatgruppen der Komponente c) von 1:0,9 bis 1:0,999, wobei die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4:1 bis 1:4 besteht.

In den unter 1. genannten Polyesterpolyurethanen ist bevorzugt, dass die Komponente a) zu 100 % aus einem Polyesterdiol des Molekulargewichtsbereichs 4000 bis 6000 besteht, bei deren Herstellung als Diolgemisch ein Gemisch aus 1,4-Dihydroxybutan und 1,6-Dihydroxyhexan im Molverhältnis von 7:3 bis 1:2 verwendet worden ist.

In den unter 1. genannten Polyesterpolyurethanen ist ferner bevorzugt, dass die Komponente c) IPDI und weiterhin HDI enthält.

In den unter 1. genannten Polyesterpolyurethanen ist ferner bevorzugt, dass bei ihrer Herstellung als Komponente b) Alkandiole, ausgewählt aus der Gruppe bestehend aus: 1,2-Dihydroxyethan, 1,3-Dihydroxypropan, 1,4-Dihydroxybutan, 1,5-Dihydroxypentan, 1,6-Dihydroxyhexan oder einer Kombination aus mindestens zwei hiervon, in einer Menge von bis zu 200 Hydroxyläquivalentprozent, bezogen auf die Komponente a), mitverwendet worden sind.

In einer weiteren bevorzugten Ausführungsform des erfindungsgemäßen Verfahrens weist das schmelzbare Polymer nach Erwärmen auf 100 °C und Abkühlen auf 20 °C bei einer Abkühlrate von 4 °C/min in einem Temperaturintervall von 25 °C bis 40 °C für ≥ 1 Minute (bevorzugt ≥ 1 Minute bis ≤ 100 Minuten, mehr bevorzugt ≥ 10 Minuten bis ≤ 60 Minuten), ein Speichermodul G' (bestimmt bei der jeweils herrschenden Temperatur mit einem Platte/Platte-Oszillationsviskosimeter gemäß ISO 6721-10 bei einer Scherrate von 1/s) von ≥ 100 kPa bis ≤ 1 MPa auf und nach Abkühlen auf 20 °C und Lagerung für 120 Minuten bei 20 °C ein Speichermodul G' (bestimmt bei 20 °C mit einem Platte/Platte-Oszillationsviskosimeter gemäß ISO 6721-10 bei einer Scherrate von 1/s) von ≥ 10 MPa (bevorzugt ≥ 100 MPa) auf.

In einer weiteren bevorzugten Ausführungsform des erfindungsgemäßen Verfahrens wird der gebildete Gegenstand einer Nachbehandlung unterzogen, die ausgewählt ist aus der Gruppe bestehend aus: mechanisches Glätten der Oberfläche, gezieltes lokales Erwärmen, Erwärmen des gesamten Gegenstands, gezieltes lokales Abkühlen, Abkühlen des gesamten Gegenstands, Kontaktieren des Gegenstands mit Wasserdampf, Kontaktieren des Gegenstands mit dem Dampf eines organischen Lösungsmittels, Bestrahlen des Gegenstands mit elektromagnetischer Strahlung, Immersion des Gegenstands in ein Flüssigkeitsbad oder einer Kombination aus mindestens zwei hiervon. Solche Nachbehandlungen dienen vor allem der Verbesserung der Oberflächengüte des Gegenstands.

In einer weiteren bevorzugten Ausführungsform des erfindungsgemäßen Verfahrens wird der Gegenstand auf einem Substrat gebildet und bleibt nach Abschluss des Verfahrens mit dem Substrat verbunden. Somit ist die Zielfläche im ersten Schritt des ersten Durchgangs im erfindungsgemäßen Verfahren das Substrat. Das Substrat ist vorzugsweise ein Bauteil, welches zur Verbindung mit anderen Bauteilen vorgesehen ist. Es ist weiter bevorzugt, dass ein Polyurethanpolymer als Material für den Gegenstand eingesetzt wird. Das Polymer kann aufgrund seiner Eigenschaften als Klebstoff und/oder als Lack nutzbar sein. Durch das erfindungsgemäße Verfahren lässt sich somit eine Klebstoff-Schicht, eine Klebstoff-Fuge, eine Lack-Schicht oder eine Beschichtung gezielt auf einem Werkstück aufbringen. Die Klebstoff-Schicht oder Klebstoff-Fuge, die durch ein erfindungsgemäßes Verfahren aufgebracht wurde, kann sich auch chemisch und optisch von gesinterten Klebstoff-Schichten unterscheiden. Durch Auftrags-Sintern erhaltene Klebstoff-Schichten weisen eine niedrigere Dichte und in der Regel eine mattere Oberfläche auf. Die Lack-Schicht oder Beschichtung, die durch ein erfindungsgemäßes Verfahren aufgebracht wurde, kann sich auch chemisch und optisch von eingebrannten Pulverlack Schichten unterscheiden. Durch Auftrags-Sintern erhaltene Lack-Schichten weisen eine positionsgenaue Auftragung und in der Regel eine mattere Oberfläche auf.

Die vorliegende Anmeldung offenbart weiterhin einen Gegenstand, der durch ein erfindungsgemäßes Verfahren hergestellt wurde. In einer bevorzugten Ausführungsform ist der Gegenstand als Klebstoff-Formkörper ausgebildet. Die Form des Klebstoff-Formkörpers kann dabei passgenau für zu verklebende Bauteile gewählt werden. Solch ein Formkörper kann bei Raumtemperatur nicht klebrig sein und auf Vorrat produziert werden. Er kann durch entsprechende Manipulations-Werkzeuge an seinen Bestimmungsort platziert werden, durch Wärme aktiviert werden und auf diese Weise zu verklebende Bauteile miteinander verkleben.

Ein weiterer Gegenstand der vorliegenden Anmeldung ist ein Artikel, hergestellt durch ein erfindungsgemäßes Verfahren mit den Merkmalen, dass der Gegenstand auf einem Substrat gebildet wird und nach Abschluss des Verfahrens mit dem Substrat verbunden bleibt, mit einem Substrat und einem mit dem Substrat verbundenen Gegenstand, wobei der Gegenstand als Klebstoff-Fuge oder als Lack-Bereich ausgebildet ist.

Die erfindungsgemäßen Materialien und Filamente mit einem Durchmesser von 3 mm, die in den nachfolgenden Experimenten verwendet wurden, wurden durch Extrusion der Ausgangsmaterialien, welche in Form von Granulat, Pellets, Pulver, vorzerkleinertem Grobgut o.Ä. mit einem maximalen Durchmesser von 4 bis 6 mm vorlagen, bei Extrusionstemperaturen unterhalb von 240°C hergestellt.

Das erfindungsgemäße Desmomelt®-Filament mit 2 mm Durchmesser wurde durch Extrusion von Desmomelt®

530 Granulat, kommerziell erhältlich von der Covestro Deutschland AG, erhalten.

Das erfindungsgemäße Dispercoll®-U Filament auf Basis von kommerziell erhältlichem Dispercoll U 56 der Covestro Deutschland AG, wurden aus einer stabilen wässrigen Dispersion durch Ausfrieren bei -20 °C ausgefällt, filtriert und vor dem Extrudieren in einem Trockenschrank der Firma Binder FDL115 für 48 Stunden bei 30°C getrocknet. Dazu wurde das Pulver auf einem Blech ausgebreitet. Das verwendete erfindungsgemäße Dispercoll® U Filament mit 2 mm Durchmesser wurde durch Extrusion des oben beschriebenen getrockneten Dispercoll® U 56 Pulvers erhalten.

Beide erfindungsgemäßen Filamente wurden vor der Benutzung für 24h bei 30°C im Vakuumtrockenschrank getrocknet.

Das Vergleichsmaterial ABS wurde von German RepRap bezogen und verwendet wie geliefert.

Für den Versuch wurden ein Dispercoll® U56 und ein Desmomelt® 530 verwendet. Für den Versuch wurden einzelne Bahnen in einer quadratischen Form, bei verschiedenen Umgebungstemperaturen übereinander gelegt. Die Temperaturen wurden dabei mit einem Heißluftfön des Typs HG 2320 E (Steinel) und mithilfe von Trockeneis in der Baukammer erzeugt. Die Umgebungstemperatur wurde unmittelbar neben dem gedruckten Objekt mit einem Temperaturmessgerät testo 735 (Testo) mit einem Typ K (pt100) Messfühler gemessen. Um eine stabile Temperatur zu gewährleisten, wurde nach dem Erreichen der soll- Temperatur mindestens 10 Minuten gewartet. Der verwendete FDM Drucker war ein X400 (German RepRap), welcher mir einem Titan Extruder (E3D) und einem Full Metal Hotend v6 (E3D) ausgestattet war. Die Kantenlängen des gedruckten Objektes betrugen 50 mm. Die Ecken hatten einen Radius von 10 mm. Dabei wurde alle 40 Runden in der Höhe die Verfahr-Geschwindigkeit um 5 mm/s erhöht. Der Druck wurde solange fortgeführt, bis deutlich sichtbare Druckfehler entstanden, oder das Objekt durch Hitze kollabierte. Die Düsentemperatur betrug 240°C. Die Düse hatte einen Durchmesser von 0,4 mm und die Schichtdicke Betrug 0,2 mm. Die erste Geschwindigkeit betrug 30 mm/s und wurde dann alle 40 Runden um 5 mm/s erhöht. Nach dem Abbruch des Druckes wurden die Proben aus den verschiedenen Umgebungstemperaturen verglichen und die Druckgeschwindigkeit beziehungsweise Rundenzahl notiert, bei der es zum Fehler kam. Der Fehler zeichnete sich bei allen Proben dadurch aus, dass das Objekt stellenweise, oder vollständig durch zu hohen Hitzeeintrag kollabierte und damit die gewünschte Geometrie verloren ging.

In Tabelle 1 sind die Ergebnisse der Versuche an den erfindungsgemäß geeigneten Materialien -mit (*) gekennzeichnet- nach dem erfindungsgemäßen Verfahren -mit (*) gekennzeichnet- gezeigt.

Tabelle 1: Vergleich der Testkörper von erfindungsgemäß geeignete Materialien (mit * gekennzeichnet) und nicht-erfindungsgemäßen Materialien nach dem erfindungsgemäßen Verfahren (mit * gekennzeichnet).

| Bauraumtem peratur [°C] | | ABS German RepRap | Desmomelt® 530 (*) | Dispercoll® U 56 (*) |
|---|---|---|---|---|
| 60°C | Anzahl Lagen / Lagenhaftung | >100 spröde | <30 gut | <10 gut |
| 49°C(*) | Anzahl Lagen / Lagenhaftung | >100 spröde | <50 gut | <20 gut |
| 25°C(*) | Anzahl Lagen / Lagenhaftung | >100 sehr spröde | <70 gut | <30 gut |
| 10°C(*) | Anzahl Lagen / Lagenhaftung | >100 sehr spröde | <120 gut | <70 gut |

Es konnte gezeigt werden, dass bei einer Materialtemperatur von > 50 °C, aus den erfindungsgemäß geeigneten Materialien nur bedingt brauchbare dimensionsstabile Produkte erhalten werden konnten. Durch eine Absenkung der Bauraumtemperatur auf < 50°C wurden deutlich bessere Ergebnisse erzielt, wobei auffiel, dass die Anzahl an Materiallagen bis zu einer deutlichen geometrischen Verformung des Prüfkörpers mit sinkender Temperatur des Bauraums deutlich zunahm. Nicht erfindungsgemäße Materialien zeigen demgegenüber beim erfindungsgemäßen Verfahren zum Teil eine vergleichsweise hohe Zahl an möglichen Lagen ohne große geometrische Verformung, allerdings sind die Lagen besonders bei tieferen Temperaturen nur sehr wenig haftend und außerordentlich spröde verbunden.

**Patentansprüche**

**1.** Verfahren zur Herstellung eines Gegenstandes, umfassend die Schritte:

    I) Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;

II) Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;

III) Wiederholen des Schritts II), bis der Gegenstand gebildet ist;

wobei wenigstens die Schritte II) und III) innerhalb einer Kammer durchgeführt werden und das Aufbaumaterial ein schmelzbares Polymer aufweist;

wobei das schmelzbare Polymer ein Polyurethan ist, das erhältlich ist aus der Reaktion einer Polyisocyanatkomponente und einer Polyolkomponente, wobei die Polyolkomponente ein Polyesterpolyol umfasst, **dadurch gekennzeichnet, dass** das Polyesterpolyol einen Stockpunkt (ASTM D5985) von $\geq$ 25°C aufweist, das schmelzbare Polymer einen Schmelzbereich (DSC, differential scanning calorimetry; 2. Aufheizung mit Aufheizrate 5 K/min.) von $\geq$ 20 °C bis $\leq$ 100 °C aufweist, das schmelzbare Polymer einen Betrag der komplexen Viskosität $|\eta^*|$ (bestimmt durch Viskosimetriemessung in der Schmelze mit einem Platte/Platte-Oszillationsscherviskosimeter bei 100 °C und einer Scherrate von 1/s) von $\geq$ 10 Pas bis $\leq$ 1000000 Pas aufweist und dass die Temperatur innerhalb der Kammer $\leq$ 50 °C beträgt.

2.  Verfahren gemäß Anspruch 1, wobei das Innere der Kammer zumindest zeitweise gekühlt wird.

3.  Verfahren gemäß einem der vorhergehenden Ansprüche, wobei das Innere der Kammer zumindest zeitweise nicht beheizt wird.

4.  Verfahren gemäß einem der vorhergehenden Ansprüche, wobei das schmelzbare Polymer eine Shore-Härte (DIN ISO 7619-1) von $\geq$ 40 Shore A bis $\leq$ 80 Shore D aufweist.

5.  Verfahren gemäß einem der vorhergehenden Ansprüche, wobei das schmelzbare Polymer nach Erwärmen auf 100 °C und Abkühlen auf 20 °C bei einer Abkühlrate von 4 °C/min in einem Temperaturintervall von 25 °C bis 40 °C für $\geq$ 1 Minute ein Speichermodul G' (bestimmt bei der jeweils herrschenden Temperatur mit einem Platte/Platte-Oszillationsviskosimeter gemäß ISO 6721-10 bei einer Scherrate von 1/s) von $\geq$ 100 kPa bis $\leq$ 1 MPa aufweist und nach Abkühlen auf 20 °C und Lagerung für 120 Minuten bei 20 °C ein Speichermodul G' (bestimmt bei 20 °C mit einem Platte/Platte-Oszillationsviskosimeter gemäß ISO 6721-10 bei einer Scherrate von 1/s) von $\geq$ 10 MPa aufweist.

6.  Verfahren gemäß einem der vorhergehenden Ansprüche, wobei der gebildete Gegenstand einer Nachbehandlung unterzogen wird, die ausgewählt ist aus der Gruppe bestehend aus: mechanisches Glätten der Oberfläche, gezieltes lokales Erwärmen, Erwärmen des gesamten Gegenstands, gezieltes lokales Abkühlen, Abkühlen des gesamten Gegenstands, Kontaktieren des Gegenstands mit Wasserdampf, Kontaktieren des Gegenstands mit dem Dampf eines organischen Lösungsmittels, Bestrahlen des Gegenstands mit elektromagnetischer Strahlung, Immersion des Gegenstands in ein Flüssigkeitsbad oder einer Kombination aus mindestens zwei hiervon.

7.  Verfahren gemäß einem der vorhergehenden Ansprüche, wobei der Gegenstand auf einem Substrat gebildet wird und nach Abschluss des Verfahrens mit dem Substrat verbunden bleibt.

**Claims**

1.  A method of producing an article, comprising the steps of:

I) applying a filament of an at least partly molten construction material to a carrier, such that a layer of the construction material is obtained, which corresponds to a first selected cross section of the article;

II) applying a filament of the at least partly molten construction material to a previously applied layer of the construction material, such that a further layer of the construction material is obtained, which corresponds to a further selected cross section of the article and which is bonded to the layer applied beforehand;

III) repeating step II) until the article is formed;

where at least steps II) and III) are conducted within a chamber and the construction material includes a fusible polymer;

wherein the fusible polymer is a polyurethane obtainable from the reaction of a polyisocyanate component and a polyol component, said polyol component comprising a polyesterpolyol

**characterized in that** the polyesterpolyol has a pour point (ASTM D5985) of $\geq$ 25°C, w
the fusible polymer has a melting range (DSC, differential scanning calorimetry, 2nd heating operation at heating rate 5 K/min.) of $\geq$ 20°C to $\leq$ 100°C,
the fusible polymer has a magnitude of the complex viscosity $|\eta^*|$ (determined by viscometry measurement in the melt with a plate/plate oscillation shear viscometer at 100°C and a shear rate of 1/s) of $\geq$ 10 Pas to $\leq$ 1 000 000 Pas
and **in that** the temperature within the chamber is $\leq$ 50°C.

2. The method as claimed in claim 1, wherein the interior of the chamber is cooled at least at times.

3. The method as claimed in any of the preceding claims, wherein the interior of the chamber is not heated at least at times.

4. The method as claimed in any of the preceding claims, wherein the fusible polymer has a Shore hardness (DIN ISO 7619-1) of $\geq$ 40 Shore A to $\leq$ 80 Shore D.

5. The method as claimed in any of the preceding claims, wherein the fusible polymer, after heating to 100°C and cooling to 20°C at a cooling rate of 4°C/min, within a temperature interval from 25°C to 40°C for $\geq$ 1 minute, has a storage modulus G' (determined at the respective temperature with a plate/plate oscillation viscometer according to ISO 6721-10 at a shear rate of 1/s) of $\geq$ 100 kPa to $\leq$ 1 MPa and, after cooling to 20°C and storage at 20°C for 120 minutes, has a storage modulus G' (determined at 20°C with a plate/plate oscillation viscometer according to ISO 6721-10 at a shear rate of 1/s) of $\geq$ 10 MPa.

6. The method as claimed in any of the preceding claims, wherein the article formed is subjected to an aftertreatment selected from the group consisting of: mechanical smoothing of the surface, controlled local heating, heating of the entire article, controlled local cooling, cooling of the entire article, contacting of the article with steam, contacting of the article with the vapor of an organic solvent, irradiating the article with electromagnetic radiation, immersing the article into a liquid bath, or a combination of at least two of these.

7. The method as claimed in any of the preceding claims, wherein the article is formed on a substrate and, on conclusion of the method, remains bonded to the substrate.

**Revendications**

1. Procédé de fabrication d'un objet, comprenant les étapes :

I) application d'un filament d'un matériau de construction au moins partiellement fondu sur un support, de manière à obtenir une couche du matériau de construction qui correspond à une première section transversale sélectionnée de l'objet ;
II) application d'un filament dudit matériau de construction au moins partiellement fondu sur une couche appliquée au préalable du matériau de construction de manière à obtenir une autre couche du matériau de construction qui correspond à une autre section transversale sélectionnée de l'objet et qui est reliée à la couche appliquée au préalable ;
III) répétition de l'étape II) jusqu'à ce que l'objet soit formé ;

au moins les étapes II) et III) étant effectuées à l'intérieur d'une chambre et le matériau de construction présentant un polymère fusible ;

le polymère fusible étant un polyuréthane qui peut être obtenu par la réaction d'un composant polyisocyanate et d'un composant polyol, le composant polyol comprenant un polyesterpolyol,
**caractérisé en ce que** le polyesterpolyol présente un point d'écoulement (ASTM D5985) $\geq$ 25°C,
le polymère fusible présente une plage de fusion (DSC, calorimétrie différentielle à balayage ; 2ème chauffage à une vitesse de chauffage de 5 K/min) de $\geq$ 20°C à $\leq$ 100°C,

le polymère fusible présente une contribution de la viscosité complexe $|\eta^*|$ (déterminée par une mesure viscosimétrique en masse fondue à l'aide d'un viscosimètre à cisaillement par oscillation plaque/plaque à 100°C et à une vitesse de cisaillement de 1/s) de ≥ 10 Pa.s à ≤ 1.000.000 Pa.s et **en ce que** la température à l'intérieur de la chambre est ≤ 50°C.

2. Procédé selon la revendication 1, l'intérieur de la chambre étant au moins temporairement refroidi.

3. Procédé selon l'une quelconque des revendications précédentes, l'intérieur de la chambre étant au moins temporairement non chauffée.

4. Procédé selon l'une quelconque des revendications précédentes, le polymère fusible présentant une dureté Shore (DIN ISO 7619-1) de ≥ 40 Shore A à ≤ 80 Shore D.

5. Procédé selon l'une quelconque des revendications précédentes, le polymère fusible présentant, après chauffage à 100°C et refroidissement à 20°C à une vitesse de refroidissement de 4°C/min dans un intervalle de température de 25°C à 40°C pendant ≥ 1 minute, un module d'accumulation G' (déterminé à la température respective qui règne à l'aide d'un viscosimètre à oscillations plaque/plaque selon la norme ISO 6721-10 à une vitesse de cisaillement de 1/s) de ≥ 100 KPa à ≤ 1 MPa et présentant, après refroidissement à 20°C et entreposage pendant 120 minutes à 20°C, un module d'accumulation G' (déterminé à 20°C à l'aide d'un viscosimètre à oscillations plaque/plaque selon la norme ISO 6721-10 à une vitesse de cisaillement de 1/s) de ≥ 10 MPa.

6. Procédé selon l'une quelconque des revendications précédentes, l'objet formé étant soumis à un post-traitement, qui est choisi dans le groupe constitué par : un lissage mécanique de la surface, un chauffage local ciblé, un chauffage de l'ensemble de l'objet, un refroidissement local ciblé, un refroidissement de l'ensemble de l'objet, une mise en contact de l'objet avec de la vapeur d'eau, une mise en contact de l'objet avec la vapeur d'un solvant organique, une irradiation de l'objet par un rayonnement électromagnétique, une immersion de l'objet dans un bain de liquide ou une combinaison d'au moins deux de ceux-ci.

7. Procédé selon l'une quelconque des revendications précédentes, l'objet étant formé sur un substrat et restant lié au substrat après la fin du procédé.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5121329 A
- WO 2015197515 A1
- WO 2015109141 A1
- WO 9853974 A1
- WO 2016108154 A1
- EP 0192946 A1

**In der Beschreibung aufgeführte Nicht-Patentliteratur**

- *European Polymer Journal,* 2012, vol. 48, 1611-1621